# EUROPEAN PATENT SPECIFICATION

(11) **EP 2 433 486 B1**
(45) Date of publication and mention of the grant of the patent: **26.02.2014**
(21) Application number: 11172034.8
(22) Date of filing: 30.06.2011
(51) Int. Cl.: A01F 15/10

(54) **Agricultural piston press**
Landwirtschaftliche Kolbenpresse
Presse à piston agricole

(30) Priority: 23.09.2010 DE 102010037722
(43) Date of publication of application: 28.03.2012
(73) Proprietor: Usines Claas France S.A.S, 57140 St. Remy / Woippy (FR)
(72) Inventor: Cyrille, Arnould, 57645 Montoy-Flanville (FR); Hesselmann, Ulrich, 66706 Perl (DE); Altmeyer, Marc, 57320 Alzing (FR)

(56) References cited:
- EP-B1- 1 769 674
- DE-A1- 10 360 598
- DE-U1- 20 104 700

## Description

The present invention relates to an agricultural piston press with which harvested crop picked up from a cultivated area is pressed into bale shape. Such a piston press is known for example from EP 1 769 674 B1.

This conventional piston press comprises a pressing chamber, in which a piston is oscillatingly driven in order to compress the harvested crop transported into the pressing chamber into a bale. The harvested crop enters the pressing channel via a pick-up device which pick-up device collects said harvested crop from the cultivated area, and a feeding channel, in which a so-called gatherer moves. The gatherer carries out two types of movements, namely a collecting stroke, during which it dips into the feeding channel adjacent to the inlet of the feeding channel and subsequently moves only through a front region of the feeding channel in order to pull harvested crop freshly transported into the feeding channel away from the inlet, pre-compress said harvested crop in a rear region of the feeding channel and in the process create space at the inlet for moving-up harvested crop, and a filling stroke, during which it moves from the inlet as far as to an outlet and through which the harvested crop accumulated and pre-compressed in the feeding channel is transported out of the feeding channel into the pressing chamber.

The gatherer comprises a two-armed gatherer lever, which at the end of a first lever arm carries gathering tines dipping into the feeding channel, at which the end of the second lever arm is articulated on a gatherer coupling rod and at which a pivot point between the two lever arms carries out a movement driven via an eccentric on a circular path. An end of the coupling rod facing away from the gatherer lever in turn is articulated on a gatherer control arm. When the gatherer control arm is at rest, while the pivot point of the gatherer lever circulates on its circular path, the joint, which joins the coupling rod with the second lever arm of the gatherer lever, moves on a circular arc and the gathering tines carry out gathering stroke movements on an ellipse-like path longitudinally extended in horizontal direction.

In order to control a filling stroke, the gatherer control arm in turn is coupled to the drive of the pressing piston via a piston rod and carries out a pivot movement which results in that the gathering tines follow a crescent-shaped path.

Ideally, the gathering tines both during a gathering stroke as well as during a filling stroke should steeply stab in at the inlet of the gathering channel and subsequently move at a small distance from the floor of the channel in order to collect all harvested crop in the gathering channel. At the end of a gathering stroke the gathering tines should retract steeply from the channel, wherein retraction should be selected so that in the feeding channel a pre-compressed harvested crop body is obtained whose length exactly corresponds to the height of the pressing chamber, so that, when it is transported into the pressing chamber through a filling stroke, it evenly fills out said pressing chamber over its entire cross section. During a filling stroke, in contrast, the tines should continue to follow the floor of the channel as far as to its outlet after which they should retract. It is difficult to satisfactorily fulfil these requirements with the conventional drive mechanism. Since the gatherer control arm during the filling stroke is continuously in motion, the paths of the gathering tines can only correspond at point locations during filling and collecting stroke although accurate correspondence of the paths in a front region of the gathering channel would be quite practical.

Another piston press is known from DE 201 04 700 U1. The drive of its gatherer comprises a control arm which can be locked by a rotatable latch. In case of locking, the gatherer is forced to perform a filling stroke movement in order to translocate harvested crop from the feeding channel into the press chamber. During collecting movements, the periodic movement of the gatherer follows an invariable curve.

The object of the invention is to create a baling press whose gatherer drive grants a greater degree of freedom in determining the paths of the gatherer movement.

The object is solved in that with an agricultural piston press with a pressing chamber, in which a pressing piston is moveable in an oscillating manner and a feeding channel, in which a gatherer can be switched over between a collecting movement compressing harvested crop in the feeding channel and a filling movement translocating the harvested crop from the feeding channel into the pressing chamber, a drive of the gatherer comprises a control arm which for controlling at least one of the movements of the gatherer interacts with an adjustable stop, wherein the movement of the gatherer, during which the control arm interacts with the adjustable stop, is the collecting stroke movement.

The adjustable stop is preferentially designed as a rotationally driveable cam. By giving said cam a suitable shape any relationship between a phase of the rotary movement of the cam and the deflection of the control arm resulting from this can be implemented.

In order to minimize friction and wear the control arm preferentially carries a roller loaded against the cam.

Other designs of the adjustable stop are possible. The cam can be positioned at any location of the press, as long as it is driven at appropriate speed and the movement can be transferred to the control arm. For example, the cam might be situated on the main transmission of the press.

In order to be able to quickly remove and pre-compress into smaller portions the harvested crop continuously delivered to the inlet of the feeding channel, a quick gatherer movement is desirable, whereas the pressing piston can have a significantly longer movement period than the gatherer. If the frequency of the gatherer movement is n-times of the frequency of the piston movement, the cam rotating with the frequency of the piston movement can comprise n equal sectors in order to control n cycles of the gatherer movement per piston movement.

When the adjustable stop drives an equiperiodical movement of the control arm, the path covered by the gatherer can be directly influenced by way of the course of this movement.

In order to force the control arm to follow a movement of the adjustable stop the control arm is preferentially loaded against the adjustable stop by an elastic element.

In order to be able to guide the gatherer during the filling stroke movement at least in sections on a different path than during the collecting stroke movement a coupling element can be provided which at least during a part of the filling stroke movement holds the control arm spread away from the stop.

This coupling element is preferentially a coupling rod that can be switched over between a state variable in length in which it does not overcome the force of the elastic element and a state locked in length, in which it transmits a force on to the control arm that is adequate to overcome the elastic element.

The coupling element itself can be driven by a driveshaft that also drives the pressing piston.

Additional features and advantages of the invention are obtained from the following description of exemplary embodiments making reference to the enclosed figures. It shows:
- Fig. 1: the piston press according to the invention in lateral view; and
- Fig. 2: a perspective view of the gatherer mechanism of the piston press.

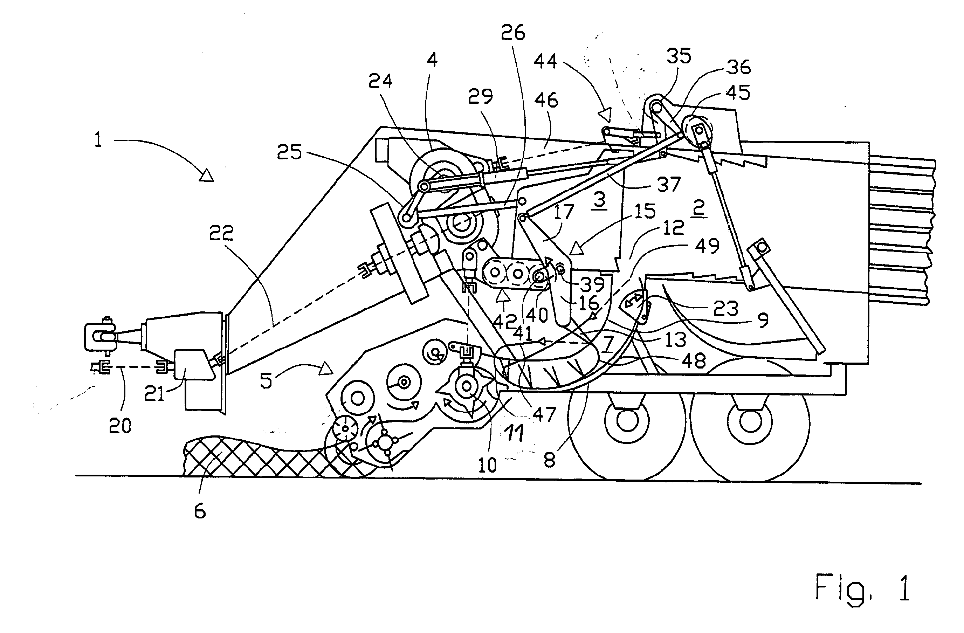

The piston press 1 shown in schematic lateral view in Fig. 1 is designed as a trailer for hitching to a traction vehicle which is not shown. It comprises a pick-up device 5, also called pick-up, for picking-up harvested crop 6 from the floor. The harvested crop collected by the pick-up device 5 and reduced by a cutting device 10 is transported to an inlet 11 of a feeding channel 7 whose outlet 12 terminates in a press chamber 2. A pressing piston 3 that can be moved to and fro in the press chamber 2 compresses the fed-in harvested crop, wherein compressed harvested crop located further downstream in the press chamber 2 and already completed pressed bales serve as abutment for the compressing.

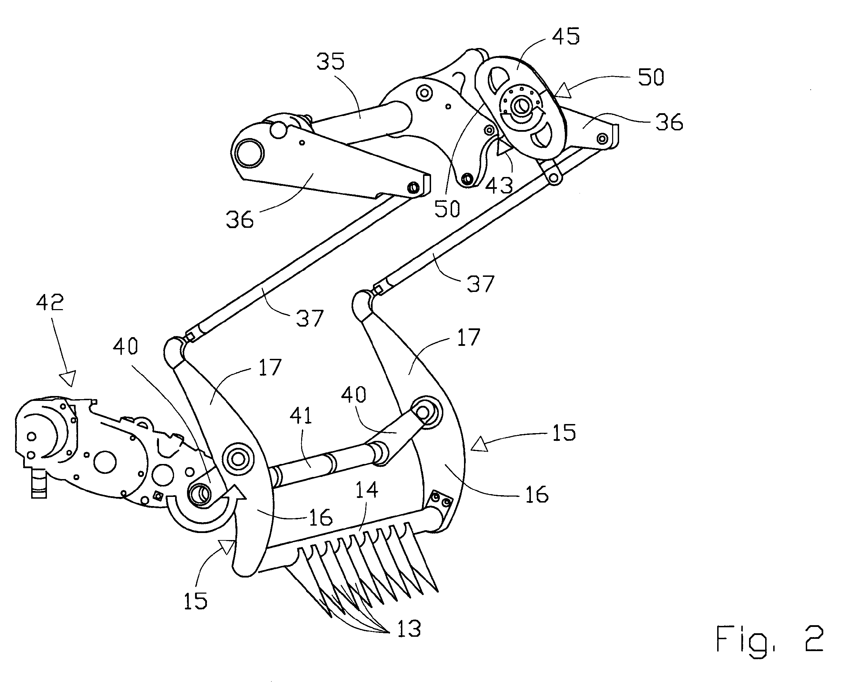

The feeding channel 7 extends arch-shaped between its inlet 11 and the outlet 12 and is delimited by a concave floor 8 and a ceiling 9. The ceiling comprises a plurality of longitudinal slits through which gathering tines 13 can dip into the feeding channel 7. The gathering tines 13 are mounted equally spaced on a cross member 14 as shown in Fig. 2. Two gatherer levers 15 each have two lever arms 16, 17 arranged at an obtuse angle relative to each other, which meet at an axis 39. The lower lever arms 16 of the two gatherer levers 15 hold the cross member 14. The axis 39 is driven by two gatherer cranks 40 on a circular path about an output shaft 41. The output shaft 41 is coupled to a main gearing 4 via a spur gearing 42, which main gearing itself is coupled to the traction vehicle via a universal shaft 22, an angular drive 21 and a further universal shaft 20 and is supplied with drive energy by said traction vehicle.

The free end of the upper lever arm 17 of each gatherer lever 15 is articulated on a control arm 36 through a gatherer coupling rod 37, which is arranged above the press chamber 2 and can pivot about an axis determined by a control shaft 35. The control arm 36 is loaded in anti-clockwise direction through a spring element, in this case a gas spring 44, so that a roller 43 carried by the control arm 36 bears against the circumference of a cam 45. The circumference of the cam 45 comprises two identical sectors 50 each extending over half of the circumference. It is coupled to the main gearing 4 via a universal shaft 46.

In the representation of Fig. 1 an output shaft 24 of the main gearing 4 is hidden behind a telescopic rod 29 an end of which is articulated on the control arm 36 and the other end on a piston crank 25 driven by the output shaft 24. The piston crank 25 drives the to-and-fro movement of the pressing piston 3 via a connecting rod 26.

As long as the telescopic rod 29 is not in a state locked in length, the movement of its end acting on the piston crank 25 has no influence on the control arm 36. The position of the latter is thus solely determined by the orientation of the cam 45, against which the roller 43 is pressed by the gas spring 44. The cam 45 rotates with the same frequency as the output shaft 24 so that the roller 43 during the course of an oscillation of the pressing piston 3 sweeps the entire circumference of the cam 45 and thus drives two oscillating cycles of the control arm 36.

The gatherer crank 40 also rotates with twice the frequency of the piston 3, i.e. the gatherer crank 40 and the cam 45 rotate at a fixed phase ratio to each other. The orientation assumed by the gatherer lever 15 in a certain phase of this movement depends on the contour of the cam 45 that can be substantially determined arbitrarily. By suitably determining this contour this offers the possibility to control the shape of the path 47 described by the gathering tines 13 during the course of a collecting stroke.

An unambiguous rule as to how the circumference of the cam 45 should be made like in order to guarantee an ideal course of the path 47 cannot be stated since this course does not only depend on the contour of the cam 45, but also on the shape and the relative movement phases of other components of the gatherer mechanism such as particularly the coupling rod 37, of the gatherer lever 15 and the gatherer crank 40. However it is immediately clear that regardless of the influences of these components the course of the path 47 can be optimised through appropriate shaping of the cam 45 since in determining the shape of the cam 45 apart from the desired course of the path 47 substantially no peripheral conditions have to be considered. Thus, by using the cam 45, a path course can be more preferably achieved wherein the gathering tines at the inlet 11 of the feeding channel 7 substantially dip perpendicularly to its longitudinal direction and their tips subsequently cover a long distance in the direct proximity of the floor 17 before the movement abruptly changes direction and the gathering tines 13 are retracted again from the feeding channel 7. Through steep stabbing-in of the gathering tines at the inlet 11 it is ensured that the fed-in harvested crop is substantially grasped over the entire cross section of the feeding channel 7 and pushed into the feeding channel. In that the gathering tines 13 move in the immediate proximity of the floor 8 in the direction of the outlet 16 they prevent that crop remains uncompressed on the floor 8 and ensure even density of the harvested crop body formed in the feeding channel over the entire channel cross section. By way of the contour of the cam 45 it can also be determined at which point 48 of the feeding channel 7 the gathering tines 13 retract again and that in turn determines the dimensions of the pre-compacted harvested crop body shaped in a rear region of the feeding channel 7 on the other side of the location 48. A change of the shape of the cam 45 is thus sufficient to vary the dimensions of the harvested crop body and in this way adapt these to the dimensions of the pressing chamber 2 so that in said pressing chamber a pressed bale of homogenous density is obtained.

The number of collecting strokes required in order to form a harvested crop body in the feeding channel 7 that has the required density for onward transporting into the press chamber 2 is variable dependent on the inflow of the harvested crop fed in by the pick-up device 5. In order to sense the completion of a harvested crop body a hinged flap 23 is therefore arranged in the proximity of the outlet 12 which backs up the harvested crop transported through the gathering strokes. When the pressure of the harvested crop on the flap 23 exceeds a limit value, the harvested crop body is ready, the flap 23 pivots aside in order to clear the way into the press chamber 2 and the telescopic rod 29 is simultaneously locked in a position of minimum length. This results in that during the subsequent rotation of the piston crank 25 the telescopic rod 29 pivots the control arm 36 against the force of the gas spring 44 in clockwise direction and in the process pulls the roller 43 off the cam 45. Because of this, the gatherer lever 15 pivots counterclockwise about the axis 39, which together with the rotation of the gatherer crank 40 results in that the gathering tines 13 follow the course of the floor 8 over almost its entire length as is shown by a path 49 in Fig. 1, before at the height of the outlet 12, having pushed the harvested crop body into the pressed chamber 2, the tines again retract from the feeding channel 7.

The sectors 50 forming the circumference of the cam 45 can each have a section that is shaped so that the roller 43 remains in contact with the section even when the telescopic rod 29 is locked in length. While the roller 43 sweeps over this section, the distance covered by the gathering tines 13 is the same irrespective of whether a collecting stroke movement or a filling stroke movement happens to be carried out at that time. If this section is swept while the gathering tines are located in the front region of the feeding channel the path, which the tines follow in this front region, is exactly identical with collecting and filling strokes and in that the shape of the floor 8 is adapted to this path, an excellent transporting effect can be ensured with both strokes.

### List of reference numbers

- 1: Piston press
- 2: Press chamber
- 3: Pressing piston
- 4: Main gearing
- 5: Pick-up device
- 6: Harvested crop
- 7: Feeding channel
- 8: Floor
- 9: Ceiling
- 10: Cutting device
- 11: Inlet
- 12: Outlet
- 13: Gathering tines
- 14: Cross member
- 15: Gatherer lever
- 16: Lever arm
- 17: Lever arm
- 20: Universal shaft
- 21: Angular drive
- 22: Universal shaft
- 23: Flap
- 24: Output shaft
- 25: Piston crank
- 26: Connecting rod
- 29: Telescopic rod
- 35: Control shaft
- 36: Control arm
- 37: Gatherer coupling rod
- 39: Axis
- 40: Gatherer crank
- 41: Output shaft
- 42: Spur gearing
- 43: Roller
- 44: Gas spring
- 45: Cam
- 46: Universal shaft
- 47: Path
- 48: Location
- 49: Path
- 50: Sector

## Claims

1. An agricultural piston press (1) with a press chamber (2) in which a pressing piston (3) is moveable in an oscillating manner and a feeding channel (7) in which a gatherer (13) can be switched over between a collecting stroke movement compressing harvested crop in the feeding channel (7) and a filling stroke movement translocating the harvested crop from the feeding channel (7) into the press chamber (2), wherein a drive of the gatherer (13) comprises a control arm (36) which for controlling at least one of the gatherer movements interacts with an adjustable stop (45),
**characterized in that** the movement of the gatherer (13), wherein the control arm (36) interacts with the adjustable stop (45), is the collecting stroke movement.

2. The agricultural piston press according claim 1, **characterized in that** the adjustable stop is a rotationally driveable cam (45).

3. The agricultural piston press according to claim 2, **characterized in that** the control arm (36) carries a roller (43) that is loaded against the cam (45).

4. The agricultural piston press according to claim 2 or 3, **characterized in that** the frequency of the collecting stroke movement of the gatherer (13) is n-times the frequency of the movement of the pressing piston (3) and that the cam (45) rotating with the frequency of the pressing piston movement comprises n equal sectors (50).

5. The agricultural piston press according to any one of the preceding claims, **characterized in that** the adjustable stop (45) drives a movement of the control arm (36) that is equiperiodical to the movement of the gatherer (13).

6. The agricultural piston press according to any one of the preceding claims, **characterized in that** the control arm (36) is loaded against the adjustable stop (45) through an elastic element (44).

7. The agricultural piston press according to any one of the preceding claims, **characterized by** a coupling element (29) which at least during a part of the filling stroke movement holds the control arm (36) spread away from the stop (45).

8. The agricultural piston press according to claim 6 and claim 7, **characterized in that** the coupling element (29) is a telescopic rod (29) that can be switched over between a state variable in length in which it does not overcome the force of the elastic element (44) and a state locked in length, in which it transmits a force adequate to overcome the elastic element (44) on to the control arm (36).

9. The agricultural piston press according to claim 7 or 8, **characterized in that** the coupling element (29) is driven by a driveshaft (24) of the pressing piston (3).

## Patentansprüche

1. Landwirtschaftliche Kolbenpresse (1) mit einer Presskammer (2), in der ein Presskolben (3) in einer hin-und herbewegenden Art beweglich ist, und einem Zuführkanal (7) in dem ein Sammler (13) zwischen einer Sammelhubbewegung, die geerntetes Erntegut in dem Zuführkanal (7) komprimiert, und einer Füllhubbewegung, die das geerntete Erntegut von dem Zuführkanal (7) in die Presskammer (2) verlagert, umgeschaltet werden kann, wobei ein Antrieb des Sammlers (13) einen Steuerarm (36) aufweist, der zum Steuern mindestens einer der Sammlerbewegungen mit einem einstellbaren Anschlag (45) zusammenwirkt,
**dadurch gekennzeichnet, dass** die Bewegung des Sammlers (13), bei der der Steuerarm (36) mit dem einstellbaren Anschlag (45) zusammenwirkt, die Sammelhubbewegung ist.

2. Landwirtschaftliche Kolbenpresse nach Anspruch 1, **dadurch gekennzeichnet, dass** der einstellbare Anschlag eine in Drehung antreibbare Nocke (45) ist.

3. Landwirtschaftliche Kolbenpresse nach Anspruch 2, **dadurch gekennzeichnet, dass** der Steuerarm (36) eine Walze (43) trägt, die gegen die Nocke (45) vorgespannt ist.

4. Landwirtschaftliche Kolbenpresse nach Anspruch 2 oder 3, **dadurch gekennzeichnet, dass** die Frequenz der Sammelhubbewegung des Sammlers (13) n Mal die Frequenz der Bewegung des Presskolbens (3) beträgt, und dass die Nocke (45), die mit der Frequenz der Presskolbenbewegung dreht, n gleiche Sektoren (50) aufweist.

5. Landwirtschaftliche Kolbenpresse nach einem der vorhergehenden Ansprüche, **dadurch gekennzeichnet, dass** der einstellbare Anschlag (45) eine Bewegung des Steuerarms (36) antreibt, die die gleiche Periode wie die Bewegung des Sammlers (13) hat.

6. Landwirtschaftliche Kolbenpresse nach einem der vorhergehenden Ansprüche, **dadurch gekennzeichnet, dass** der Steuerarm (36) gegen den einstellbaren Anschlag (45) über ein elastisches Element (44) vorgespannt ist.

7. Landwirtschaftliche Kolbenpresse nach einem der vorhergehenden Ansprüche, **gekennzeichnet durch** ein Kupplungselement (29), das mindestens während eines Teils der Füllhubbewegung den Steuerarm (36) von dem Anschlag (45) abgespreizt hält.

8. Landwirtschaftliche Kolbenpresse nach Anspruch 6 und Anspruch 7, **dadurch gekennzeichnet, dass** das Kupplungselement (29) eine Teleskopstange (29) ist, die zwischen einem in Länge variablen Zustand, in dem sie die Kraft des elastischen Elements (44) nicht überwindet, und einem in Länge verriegelten Zustand, in dem sie eine Kraft überträgt, die geeignet ist, um das elastische Element (44) auf dem Steuerarm (36) zu überwinden, umgeschaltet werden kann.

9. Landwirtschaftliche Kolbenpresse nach Anspruch 7 oder 8, **dadurch gekennzeichnet, dass** das Kupplungselement (29) von einer Antriebswelle (24) des Presskolbens (3) angetrieben ist.

## Revendications

1. Presse à piston agricole (1) comportant une chambre à presse (2) dans laquelle un piston de pression (3) est mobile de manière oscillante et un canal d'alimentation (7) dans lequel un collecteur (13) peut être basculé entre un mouvement de course de collecte qui comprime la culture récoltée dans le canal d'alimentation (7) et un mouvement de course de remplissage qui fait translater la culture récoltée du canal d'alimentation (7) à la chambre à presse (2), dans laquelle un entraînement du collecteur (13) comprend un bras de commande (36) qui, pour commander au moins l'un des mouvements du collecteur, interagit avec une butée réglable (45),
**caractérisée en ce que** le mouvement du collecteur (13), dans lequel le bras de commande (36) interagit avec la butée réglable (45), est le mouvement de course de collecte.

2. Presse à piston agricole selon la revendication 1, **caractérisée en ce que** la butée réglable est une came pouvant être entraînée en rotation (45).

3. Presse à piston agricole selon la revendication 2, **caractérisée en ce que** le bras de commande (36) porte une roulette (43) qui est mise en appui sur la came (45).

4. Presse à piston agricole selon la revendication 2 ou 3, **caractérisée en ce que** la fréquence du mouvement de course de collecte du collecteur (13) vaut n fois la fréquence du mouvement du piston de pression (3) et **en ce que** la came (45) qui tourne avec la fréquence du mouvement du piston de pression comprend n secteurs égaux (50).

5. Presse à piston agricole selon l'une quelconque des revendications précédentes, **caractérisée en ce que** la butée réglable (45) entraîne un mouvement du bras de commande (36) qui est équitemporel avec le mouvement du collecteur (13).

6. Presse à piston agricole selon l'une quelconque des revendications précédentes, **caractérisée en ce que** le bras de commande (36) est mis en appui sur la butée réglable (45) à travers un élément élastique (44).

7. Presse à piston agricole selon l'une quelconque des revendications précédentes, **caractérisée par** un élément d'accouplement (29) qui, au moins pendant une partie du mouvement de course de remplissage, maintient le bras de commande (36) écarté de la butée (45).

8. Presse à piston agricole selon les revendications 6 et 7, **caractérisée en ce que** l'élément d'accouplement (29) est une tige télescopique (29) qui peut être commutée entre un état à longueur variable dans lequel il ne surmonte pas la force de l'élément élastique (44) et un état bloqué en longueur, dans lequel il transmet une force adéquate pour surmonter l'élément élastique (44) sur le bras de commande (36).

9. Presse à piston agricole selon la revendication 7 ou 8, **caractérisée en ce que** l'élément d'accouplement (29) est entraîné par un arbre de commande (24) du piston de pression (3).
